# EUROPÄISCHE PATENTANMELDUNG

(11) **EP 1 621 282 A1**
(43) Veröffentlichungstag der Anmeldung: **01.02.2006**
(21) Anmeldenummer: 04016158.0
(22) Anmeldetag: 09.07.2004
(51) Int. Cl.: B23Q 3/10, F16B 5/00

(54) **Sandwichplatte, insbesondere zum Aufbau von Werkstück-Aufspannvorrichtungen sowie Verfahren zur Herstellung einer solchen Sandwichplatte**

(71) Anmelder: Horst Witte Entwicklungs- und Vertriebs KG, 21369 Nahrendorf (DE)
(72) Erfinder: Witte, Horst, 21369 Nahrendorf (DE)
(74) Vertreter: von Raffay, Vincenz

(57) **Zusammenfassung**

Die Sandwichplatte, insbesondere zum Aufbau von Werkstück-Aufspannvorrichtungen, die aus Strangpressprofilen, insbesondere aus einer Aluminiumlegierung zusammengefügt sind, sollen durch Kleben miteinander verbunden werden können, ohne dass Abstriche an ihrer Gesamtfestigkeit gemacht werden müssen. Dieses geschieht dadurch, dass die Strangpressprofile (1,2) an ihren Stossflächen (9,10) durch Winkelprofile (3,4) verbunden sind, deren Schenkel in entsprechend geformten Nuten (5,6,7,8) in den Stoßflächen verklebt sind, wobei jeweils mindestens zwei Winkelprofile vorgesehen sind. In vorteilhafter Weise sind die Winkelprofile im oberen und im unteren Bereich der Stossflächen vorgesehen und um 180° um ihre Längsachse zueinander gedreht. Durch diesen Einsatz der Winkelprofile in Verbindung mit entsprechend dimensionierten und gerichteten Nuten wird ein maßgenaues zusammenfügen beim Verkleben sichergestellt. Gleichzeitig wird der Schälwiderstand der Klebeflächen erhöht. Ein Trennen der Strangpressprofile voneinander ist praktisch nur durch Zerstören der Winkelprofile möglich. Das erfindungsgemäße Verfahren ist auf die einzelnen Schritte der Ausbildung der Nuten, des Einbringen des Klebers und des seitlichen Einsteckens der Winkelprofile gerichtet (Fig. 1).

## Beschreibung

Die Erfindung betrifft eine Sandwichplatte nach dem Oberbegriff des Anspruches 1 sowie ein Verfahren zur Herstellung einer solchen Sandwichplatte.

Aus der EP 1 336 453 ist eine Sandwichplatte bekannt, die aus zwei Platten, die die Aufspannfläche bilden, durch besondere Zapfen zusammengesetzt ist. Hierdurch entsteht eine hochwertige sehr ebene Aufspannfläche, die den hohen Anforderungen von derartigen Werkstück-Aufspannvorrichtungen gerecht wird.

Es sind auch Sandwichplatten bekannt, die anders aufgebaut sind und nicht für hochwertige Werkstück-Aufspannvorrichtungen, d.h. im Werkzeugbau Verwendung finden, sondern beispielsweise als Ladebordwände an Lkw's eingesetzt werden. Diese sind aus Strangpressprofilen aus Aluminiumlegierungen zusammengesetzt, da Strangpressprofile aus Aluminiumlegierungen nicht in der erforderlichen Breite hergestellt werden können. Das Zusammensetzen oder Zusammenfügen der einzelnen Strangpressprofile erfolgt durch Schweißen oder Verpressen mit Hilfe komplizierter geometrischer Profilabschnitte an den äußeren Enden, um einen Kraft- und Formschluss zu erzielen. Durch diese Fügemethoden werden Spannungen und Verformungen erzeugt, die so stark sind, dass sie im Präzisionswerkzeugbau nicht akzeptabel sind und darüber hinaus eine entsprechend intensive mechanische Nachbearbeitung erfordern.

Der Erfindung liegt nun die Aufgabe zugrunde, eine Sandwichplatte der eingangs genannten Art zu schaffen, bei der die Strangpressprofile durch Verkleben miteinander verbunden werden können, ohne dass Abstriche an ihre Gesamtfestigkeit gemacht werden müssen. Weiterhin ist die Aufgabe darin zu sehen, ein entsprechendes Verfahren zur Herstellung einer solchen Sandwichplatte zu schaffen.

Erfindungsgemäß wird diese Aufgabe bei einer Sandwichplatte der eingangs genannten Art durch das Kennzeichen des Anspruches 1 gelöst.

Durch die Verwendung zusätzlicher Profile, d.h. der Winkelprofile, wird nicht nur ein maßgenaues Zusammenfügen beim Verkleben sichergestellt, sondern durch die Tatsache, dass die einzelnen in den Nuten verklebten Schenkel in einem Winkel zueinander stehen, wird der Schälwiderstand der Klebeflächen erhöht. Um die Strangpressprofile wieder voneinander zu trennen ist praktisch ein Zerstören der Winkelprofile erforderlich.

Die Sandwichplatte nach der Erfindung kann grundsätzlich in unterschiedlicher Weise aufgebaut werden. Die Winkelprofile können einzeln und paarweise angrenzend an die jeweilige Aufspannfläche angeordnet werden. In vorteilhafter Weise ist der First des Winkelprofils immer der Aufspannfläche zugekehrt, da hierdurch die Übertragung größtmöglicher Momente möglich ist, d.h. das Winkelprofil liegt in der Nähe der Fläche, in der die größten Momente auftreten.

Grundsätzlich entsteht ein sehr maßgenaues Produkt mit großer Festigkeit, das aus einzelnen Strangpressprofilen zusammengebaut wird. Die Maßgenauigkeit liegt im Bereich von zehntel Millimetern, und es ist keine oder nur eine sehr geringe mechanische Nachbearbeitung erforderlich.

Die Verbindung der Winkelprofile mit den Strangpressprofilen folgt in einzelnen Schritten so, dass zuerst ein wechselseitiges Verkleben des einen Schenkels erfolgt und zwar derart, dass sämtliche anderen noch freien Schenkel gleich gerichtet sind, so dass auf die zu verbindenden Strangpressprofile dann durch Einschieben der anderen Schenkel in die zugeordneten Nuten zusammengefügt werden können.

Das erfindungsgemäße Verfahren ermöglicht das einfache und sinnvolle Zusammensetzen und -fügen der einzelnen Strangpressprofile. Nach dem Befestigen jeweils eines Winkelprofils oder eines Winkelprofilpaares in einer Nut der ausgewählten Stossfläche werden nach Einbringen des Klebers die zu verbindenden Strangpressprofile in Richtung der vorstehenden freien Schenkel zusammengefügt. Diese Bewegung ist zwangsläufig und stellt sicher, dass die zu verbindenden Strangpressprofile präzise nebeneinander liegen. Ihre Aufspannflächen liegen sehr genau in einer gemeinsamen Ebene. Die miteinander verbundenen Strangpressprofile können nach dem Aushärten des Klebers nur durch Zerstörung der Winkelprofile wieder voneinander getrennt werden, so dass die Verbindungsstellen eine hohe Festigkeit aufweisen. Die Winkelprofilschenkel werden seitlich, d.h. im wesentlichen senkrecht zu der Stossfläche eingeführt, so dass sichergestellt ist, dass der Kleber auch über die gesamten Flächen zwischen Nut und Schenkel vorhanden ist. Überschüssiger, aus der Nut wieder herausgedrückter Kleber beim Einfügen der Winkelprofilschenkel sorgt für eine zusätzliche Verklebung der Stossflächen untereinander.

Im folgenden wird die Erfindung unter Hinweis einiger Ausführungsbeispiele näher erläutert.

Es zeigt:
- Fig. 1: eine Ansicht zweier zu einer Sandwichplatte zu verbindenden Strangpressprofile und der entsprechenden zur Verbindung vorgesehenen Winkelprofile vor dem zusammenfügen;
- Fig. 2: eine der Fig. 1 entsprechende Ansicht, jedoch mit den Winkelprofilen, eingesteckt in jeweils eine Nut als ersten Schritt des Zusammenfügens;
- Fig. 3: eine den Figuren 1 und 2 entsprechende Ansicht der Strangpressprofile und der Winkelprofile im endgültig zusammengefügten Zustand;
- Fig. 4: eine Ansicht einer Ausführungsform mit jeweils zwei Winkelprofilen im oberen und im unteren Bereich, wobei die Winkelprofile gleich gerichtet sind;
- Fig. 5: eine Ansicht mit einem Grundprofil zum Aufbau räumlicher Sandwichplatten aus entsprechenden Strangpressprofilen; und
- Fig. 6: eine der Fig. 4 entsprechende Ansicht, jedoch mit in Längsrichtung um 180° zueinander gedrehten Winkelprofilen jeweils im oberen und im unteren Bereich.

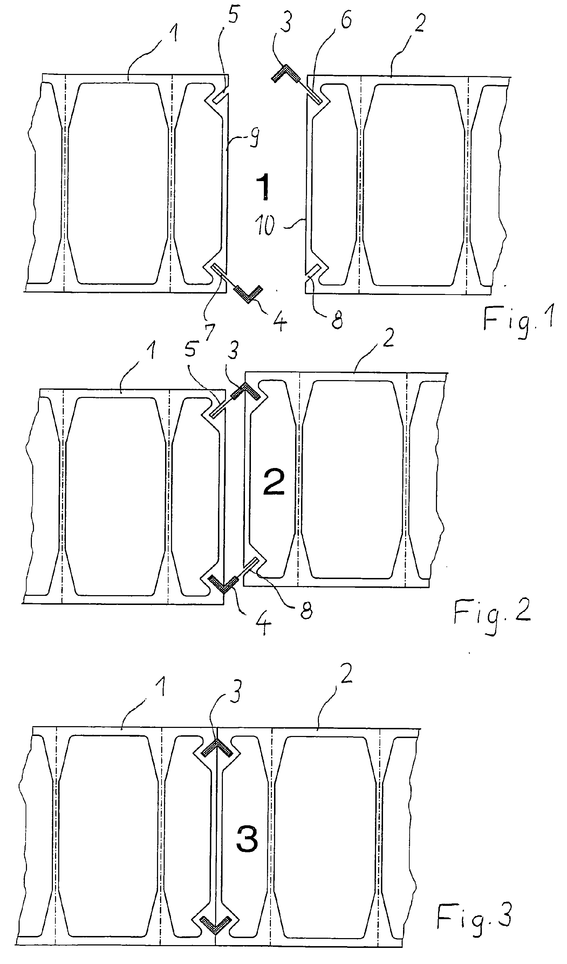

In den Figuren 1 und 2 ist eine Ausführungsform zur Herstellung einer Sandwichplatte nach der Erfindung dargestellt. Diese Sandwichplatte wird aus mehreren Strangpressprofilen 1, 2 zusammengebaut, von denen zwei in den Figuren 1 bis 3 dargestellt sind. Die Anzahl der miteinander zusammengebauten und nebeneinander liegenden Strangpressprofile bestimmt die Breite der Sandwichplatte. Bei den Strangpressprofilen 1 und 2 handelt es sich um Hohlprofile oder Hohlkammerprofile, die in herkömmlicher Weise durch Strangpressen in einer entsprechend beschränkten Breite aus den unterschiedlichsten Aluminiumlegierungen hergestellt werden können.

Die Verbindung zwischen den Strangpressprofilen 1 und 2 erfolgt mit Hilfe von Winkelprofilen 3 und 4, die in besonderer Weise angeordnet sind und verklebt werden. In den Stossflächen 9 und 10 sind im oberen und im unteren Bereich Nuten 5, 6, 7, 8 vorgesehen, die in einem Winkel schräg verlaufen, der durch den Winkel der entsprechenden Winkelprofile 3 und 4 vorgegeben ist. Bei dieser Ausführungsform handelt es sich um einen rechten Winkel, d.h. die Nuten verlaufen in einem Winkel von 45° zu der entsprechenden Aufspannfläche. Es sind aber auch spitzere und stumpfere Winkel möglich, wobei die Winkelprofile immer gleiche Winkel aufweisen müssen. Die Winkelprofile im oberen bzw. unteren Bereich sind aber um ihre Längsachse um 180° gedreht zueinander angeordnet, wie es sich beim Betrachten der Figuren 1 bis 3 ergibt. Hierdurch wird erreicht, dass die Firste in der Nähe der Aufspannflächen liegen, ohne dass es zu nachteiligen Querschnittsschwächungen kommt.

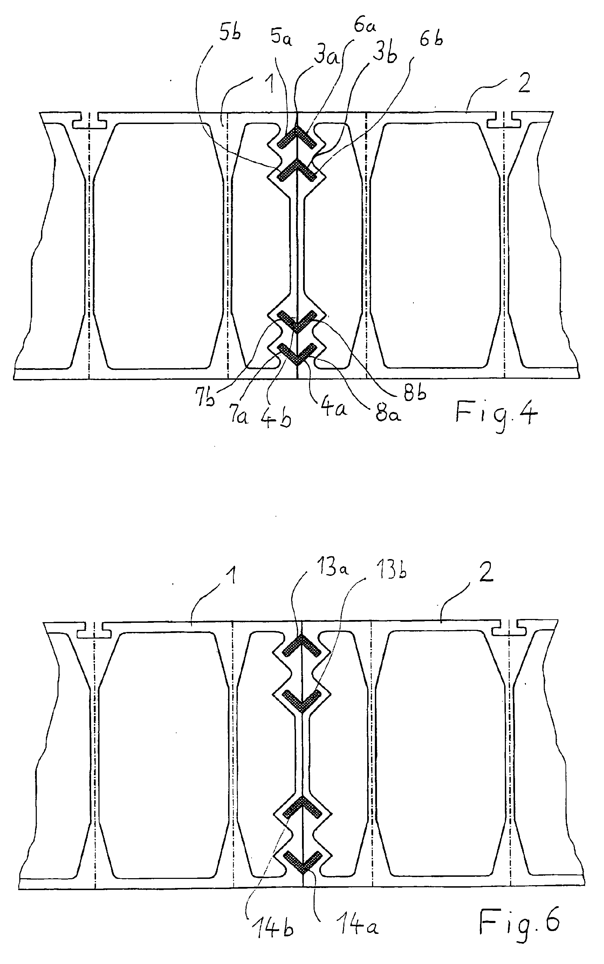

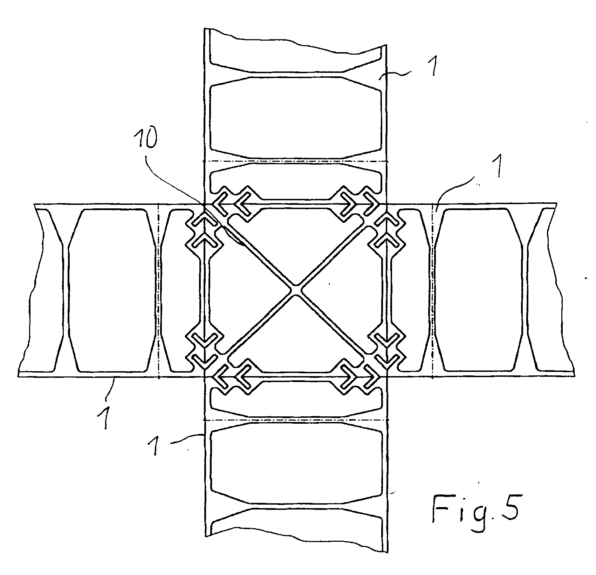

Um die Profile 1 und 2 und ggf. weitere Profile zu einer Sandwichplatte miteinander zu verbinden, wird zuerst die Nut 6 mit Kleber gefüllt. Dann wird das Strangpressprofil 1 so gedreht, dass die Nut 7 oben liegt, so dass der eingebrachte Kleber nicht wieder herausläuft. Diese Maßnahme ist nur dann sinnvoll, wenn der Kleber entsprechend dünnflüssig ist. Als Kleber wird vorzugsweise Epoxid eingesetzt. Nach dem Einbringen des Klebers in die Nuten 6 und 7 werden die Winkelprofile 3 und 4 seitlich eingesteckt, so dass sie vollflächig verklebt werden. Überschüssiges Klebemittel tritt ggf. aus und sorgt für eine zusätzliche Verklebung im Bereich der Stossflächen selbst. Nach dem Einstecken der Winkelprofile 3 und 4 in den Nuten 6 und 7 werden die beiden anderen Nuten 5 und 8 mit Kleber gefüllt. Jetzt werden die Profile 1 und 2 in Richtung der freien Schenkel der Winkelprofile 3 und 4 aufeinander zu bewegt, so dass die freien Schenkel in die Nuten 5 und 8 gelangen und dort vollflächig mit Klebemittel bedeckt werden. Auch hier gelangt überschüssiges Klebemittel ggf. auf die Stossflächen 9 und 10. Die Strangpressprofile 1 und 2 werden dann so zusammengedrückt, bis sie die in Fig. 3 gezeigte Lage einnehmen. Die Profile 1 und 2 bilden eine gemeinsame Aufspannfläche in einer Ebene. Nach dem Aushärten der Klebemittel ist eine Trennung nur durch Zerstörung der Winkelprofile möglich. Da die Winkelprofile im oberen und im unteren Bereich vorgesehen sind, können entsprechend große Momente aufgenommen und übertragen werden.

In Fig. 4 ist eine andere Ausführungsform dargestellt, bei der im oberen und unteren Bereich jeweils zwei Winkelprofile 3a, 3b bzw. 4a und 4b vorgesehen sind, die in entsprechenden Nuten 5a, 5b, 6a, 6b, 7a, 7b, 8a, 8b verklebt sind. Durch die Verwendung von zwei oder mehreren Winkelprofilen in jedem Bereich wird die Klebefläche jeweils praktisch verdoppelt.

Fig. 5 zeigt eine Ausführungsform, bei der die Winkelprofile grundsätzlich so angeordnet sind, wie bei der Ausführungsform nach Fig. 4. Es ist aber ein Grundstrangpressprofil 10 vorhanden, das allseitig mit Nuten zur Aufnahme von Winkelprofilen versehen ist, so dass auch in vier Richtungen ein Strangpressprofil zum Aufbau eines entsprechend räumlichen Gebildes angefügt werden kann. Derartige räumliche Gebilde, ob sie nun nach oben und nach unten zusätzlich angefügte Strangpressprofile aufweisen, dienen dem Aufbau entsprechend spezieller Sandwichplatten, beispielsweise solcher, die senkrecht stehen oder Füße aufweisen. Zur Verbindung des Grundstrangpressprofils 10 sind je nach Ausführungsform entsprechende Winkelprofile erforderlich, die grundsätzlich so zusammengefügt und eingesetzt werden, wie es in Verbindung mit den Figuren 1 bis 3 beschrieben wurde.

Die Ausführungsform nach Fig. 6 unterscheidet sich dadurch von derjenigen nach Fig. 4, das im oberen Bereich Winkelprofile 13a und 13b und entsprechend im unteren Bereich Winkelprofile 14a und 14b vorgesehen sind, die zueinander um 180° um die Längsachse gedreht angeordnet sind.

Durch die besondere Art der Verbindung oder des Zusammenfügens der einzelnen Strangpressprofile wird eine Sandwichplatte geschaffen, deren Aufspannfläche, ohne dass eine mechanische Bearbeitung erforderlich ist - oder nur eine sehr geringe mechanische Bearbeitung - sehr maßhaltig und genau hergestellt wird. Spannungen und Verwerfungen durch das Verbinden beim Kleben entstehen nicht. Die Verbindung selbst ist durch die Tatsache, dass die Winkelprofile zum Trennen praktisch zerstört werden müssen, sehr fest und sicher. Das Verfahren zur Herstellung der Sandwichplatte ermöglicht ein präzises Zusammenfügen der einzelnen Strangpresselemente, wobei das seitliche Zusammenstecken eine vollflächige Verklebung sicherstellt.

## Patentansprüche

1. Sandwichplatte, insbesondere zum Aufbau von Werkstück-Aufspannvorrichtungen, die aus Strangpressprofilen, insbesondere aus einer Aluminiumlegierung zusammengefügt sind, **dadurch gekennzeichnet, dass** die Strangpressprofile (1,2) an ihren Stossflächen (9,10) durch Winkelprofile (3,4) verbunden sind, deren Schenkel in entsprechend geformten Nuten (5,6,7,8) in den Stossflächen verklebt sind, wobei jeweils mindestens zwei Winkelprofile vorgesehen sind.

2. Sandwichplatte nach Anspruch 1, **dadurch gekennzeichnet, dass** die Winkelprofile (3,4) um 180° um ihre Längsachse gedreht zueinander angeordnet sind.

3. Sandwichplatte nach Anspruch 1, **dadurch gekennzeichnet, dass** jeweils ein Winkelprofil (3) im oberen und ein um die Längsachse um 180° gedrehtes Winkelprofil (4) im unteren Bereich der Stossflächen (9,10) vorgesehen sind.

4. Sandwichplatte nach Anspruch 3, **dadurch gekennzeichnet, dass** mindestens zwei parallele Winkelprofile (3a,3b) im oberen Bereich und mindestens zwei parallele um ihre Längsachse um 180° gedrehte Winkelprofile (4a,4b) im unteren Bereich vorgesehen sind (Fig. 4).

5. Sandwichplatte nach Anspruch 3, **dadurch gekennzeichnet, dass** mindestens zwei parallele Winkelprofile (13a,13b) im oberen Bereich und mindestens zwei parallele Winkelprofile (14a,14b) im unteren Bereich vorgesehen sind, wobei die Winkelprofile (13a,13b) bzw. (14a,14b) in einem Bereich jeweils um 180° gedreht zueinander angeordnet sind (Fig. 6).

6. Sandwichplatte nach einem oder mehreren der vorstehenden Ansprüche, **dadurch gekennzeichnet, dass** die an die jeweilige Aufspannfläche angrenzenden Winkelprofile (3,4) bzw. (3a,3b,4a,4b) jeweils mit ihrem First zu dieser zugeordneten Aufspannfläche ausgerichtet sind.

7. Verfahren zum Herstellen von Sandwichplatten nach einem oder mehreren der vorstehenden Ansprüche 1 bis 4, **gekennzeichnet durch** folgende Verfahrensschritte:
a) Ausbilden der entsprechend dimensionierten Nuten (5,6,7,8) zur Aufnahme der zugeordneten Winkelprofilschenkel (3,4) in den Stossflächen (9,10) der miteinander zu verbindenden Strangpressprofile (1,2);
b) Einbringen eines Klebers in die eine Nut (6) im oberen Bereich und die andere in der gegenüberliegenden Stossfläche liegenden Nut (7) im unteren Bereich;
c) seitliches Einstecken eines Winkelprofils (3,4) in die jeweils zugeordnete mit Kleber versehene Nut (6,7) im oberen und im unteren Bereich;
d) Einbringen eines Klebers in die noch freien, gegenüberliegenden Nuten (5,8) in den angrenzenden Stossflächen (9,10);
e) seitliches Einführen der noch freien gegenüberliegenden Winkelprofilschenkel in die jeweils zugeordneten noch freien, mit Kleber versehenen Nuten (5,8) **durch** Zusammenfügen der Strangpressprofile in Richtung dieser Winkelprofilschenkel;
f) Aushärten des Klebers.

8. Verfahren nach Anspruch 7, **dadurch gekennzeichnet, dass** der Kleber zuerst in die Nut oder Nuten auf der einen Stossfläche eingebracht wird, die zur Aufnahme eines Winkelprofils mit ihrem First ausgerichtet nach der einen Seite und anschließend in die anderen Nuten der anderen Stossfläche für die um 180° gedreht angeordneten Winkelprofile eingebracht wird.

9. Verfahren nach Anspruch 7 oder 8, **dadurch gekennzeichnet, dass** die zu verbindenden Strangpressprofile vor dem Einbringen des Klebers in die Nut so gedreht werden, dass die Längsöffnung der Nut in der entsprechenden Stossfläche oben liegt, wobei das entsprechende Winkelprofil vor dem Zusammenfügen wieder um 180° zurückgedreht wird.
